# EUROPEAN PATENT SPECIFICATION

(11) **EP 1 439 309 B1**
(45) Date of publication and mention of the grant of the patent: **14.03.2007**
(21) Application number: 04000997.9
(22) Date of filing: 19.01.2004
(51) Int. Cl.: F15B 1/26, B60K 15/03

(54) **Resin tank**
Kunststofftank
Réservoir en plastique

(30) Priority: 20.01.2003 JP 2003011417
(43) Date of publication of application: 21.07.2004
(73) Proprietor: KABUSHIKI KAISHA TOYOTA JIDOSHOKKI, Kariya-shi, Aichi-ken (JP)
(72) Inventor: Suenaga, Makoto, Kariya-shi, Aichi-ken (JP)
(74) Representative: TBK-Patent

(56) References cited:
- EP-A- 0 930 190
- EP-A- 1 179 445
- DE-A- 10 129 245
- US-A- 4 501 374
- US-A- 4 625 980
- US-A- 5 443 098
- PATENT ABSTRACTS OF JAPAN vol. 2000, no. 21, 3 August 2001 (2001-08-03) & JP 2001 088858 A (TOYODA GOSEI CO LTD), 3 April 2001 (2001-04-03)

## Description

### BACKGROUND OF THE INVENTION

The present invention relates to a resin tank that reserves a liquid and more particularly to the resin tank having a pipe that circulates the liquid.

Conventionally, a tank made of resin material, such as a synthetic resin, is widely known as a tank that reserves a liquid such as oil. Japanese Unexamined Patent Publication No. 2002-195202 discloses this type of resin tank, which has a pipe to circulate the liquid. (See the drawings 1 though 3 and 16 through 20 of the above reference)

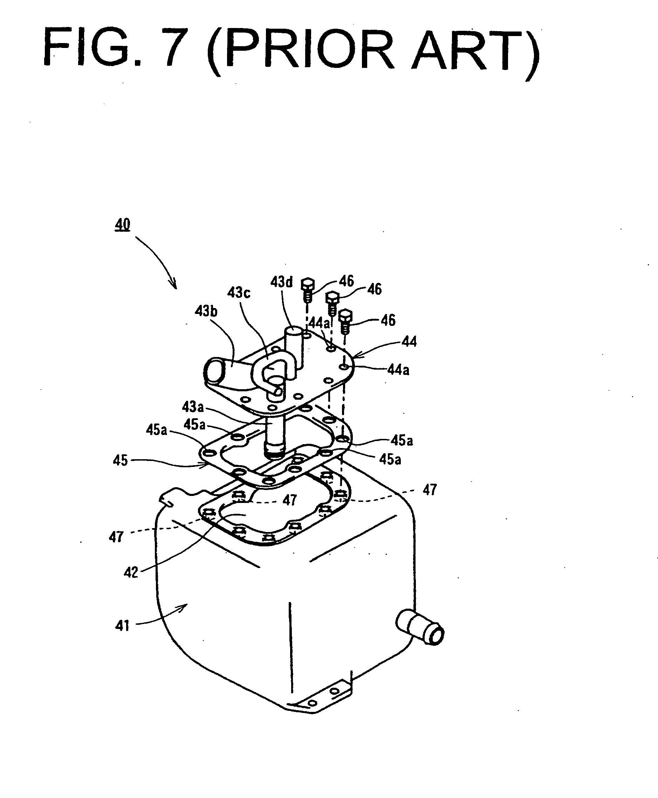

Now, referring to FIG. 7, a prior art resin tank 40 includes a tank body 41, which is made of synthetic resin, a plurality of pipes 43a, 43b, 43c and 43d, and a plate-like cover 44. An opening 42 is formed in the tank body 41, to which the cover 44 is fixed so as to cover the opening 42. The pipes 43a, 43b, 43c and 43d are installed in the cover 44.

The pipes 43a, 43b, 43c and 43d are fixed to the cover 44 by welding. The pipes 43a, 43b, 43c and 43d, and the cover 44 are made of metallic material.

In the resin tank 40, a gasket 45 is interposed between the tank body 41 and the cover 44 in order to enhance sealing performance of an interface between the tank body 41 and the cover 44. In addition, a plurality of bolts 46 fixes the cover 44 on the tank body 41.

Therefore, a plurality of bolt holes 44a is formed in the cover 44 and a plurality of bolt holes 45a is formed in the gasket 45. Meanwhile, a plurality of nuts 47 is embedded near a marginal portion of the opening 42 of the tank body 41 so as to correspond to the bolts 46.

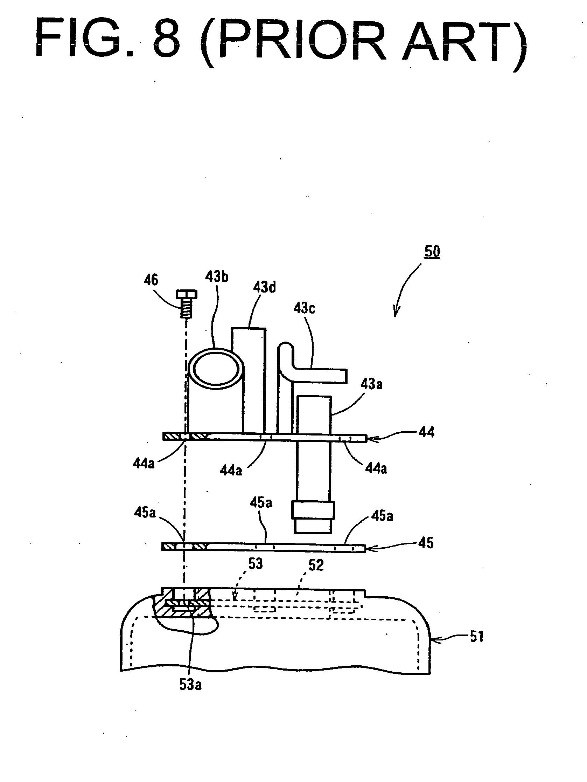

Meanwhile, referring to FIG. 8, a prior art resin tank 50 includes a tank body 51 and a frame-like bracket 53 made of metallic material. An opening 52 is formed in the tank body 51. The bracket 53, in which a plurality of tapped holes 53a is bored, is embedded near the opening 52 of the tank body 51 in place of the nuts 47, which are embedded in the tank body 41 of the resin tank 40 as described above. The gasket 45 and the cover 44 of the resin tank 50 are the same as those of the resin tank 40, which is shown in FIG. 7. In FIGS. 7 and 8, a part of reference numerals are used in common.

Such a resin tank 40 enhances sealing performance between the tank body 41 and the cover 44. Also, the resin tank 50 enhances sealing performance between the tank body 51 and the cover 44. Thereby, hydraulic leakage is prevented.

However, there is a fear of hydraulic leakage in the above-mentioned resin tanks 40 and 50. In addition, a large number of parts increase manufacturing cost. Further, assembling the resin tanks 40 and 50 becomes extremely complicated because of a large number of parts.

Specifically, referring to FIG. 7, in the resin tank 40, the nuts 47, which are embedded in the tank body 41, are attracted to the cover 44 by axial force caused by tightening the bolts 46. Thereby, the tank body 41 and the gasket 45 are bent. Consequently, the sealing performance between the cover 44 and the tank body 41 deteriorates.

In particular, when a hydraulic fluid for use in driving a loading apparatus of an industrial vehicle is handled, the temperature of the liquid rises to about 80 through about 100 °C. In this case, the deformation of the tank body 41 and the gasket 45, which is caused by the axial force of the bolts 46, becomes remarkable.

Further, the resin tank 40 requires a large number of bolts 46 and a large number of nuts 47 in order to ensure the sealing performance between the tank body 41 and the cover 44. Consequently, a large number of parts increase manufacturing cost. Further, assembling the resin tank 40 requires a complicated operation because of a large number of parts.

Meanwhile, referring to FIG. 8, the resin tank 50 requires uniformly tightening the bolts 46 to the frame-like bracket 53. Otherwise, the location of the bracket 53 relative to the tank body 51 is slanted. Thereby, the tank body 51 is deformed.

Also, when a hydraulic fluid, which is a high-temperature liquid, for use in driving the loading apparatus of the industrial vehicle is handled, there is a fear of the deformation and the crack of the tank body 51 since the coefficient of thermal expansion of the tank body 51 made of resin material is different from that of the frame-like bracket 53 made of metallic material.

Further, the resin tank 50 still requires the bolts 46 while eliminating the nuts 47 from the resin tank 40. Also, a plurality of tapped holes 53a requires machining in the frame-like bracket 53. Thereby, the effect of the elimination of the nuts 47 is cancelled by machining the frame-like bracket 53. Consequently, the manufacturing cost of the resin tank 50 is not sufficiently reduced.

In addition, assembling the resin tank 50 requires a complicated operation similarly to assembling the resin tank 40.

EP-A-0 930 190 discloses a resin tank according to the preamble of claim 1.

### SUMMARY OF THE INVENTION

The present invention is directed to a resin tank that reliably prevents leakage of a liquid, which is caused by deformation of the tank body, and that is simply assembled while reducing manufacturing cost by reducing the number of parts of the resin tank and machining of the parts to a minimum.

The present invention provides a resin tank as defined in claim 1.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
FIG. 1 is a perspective view illustrating a resin tank according to a first preferred embodiment of the present invention;
FIG. 2 is a perspective view illustrating a first pipe sealing member according to the first preferred embodiment of the present invention;
FIG. 3 is a partial cross-sectional view illustrating a relation between a tank body and the first pipe sealing member according to the first preferred embodiment of the present invention;
FIG. 4 is a partially cutaway view taken along the line A-A of FIG. 3;
FIG. 5 is a perspective view illustrating a second pipe sealing member according to the first preferred embodiment of the present invention;
FIG. 6A is a partial cross-sectional view illustrating a relation between a tank body and a third pipe sealing member according to a second preferred embodiment of the present invention;
FIG. 6B is an enlarged top view illustrating a third pipe sealing member according to the second preferred embodiment of the present invention;
FIG. 7 is a perspective view illustrating a prior art resin tank; and
FIG. 8 is a partial side view illustrating another prior art resin tank.

### DETAILED DESCRIPTION OF THE PREFERRED EMBODIMENTS

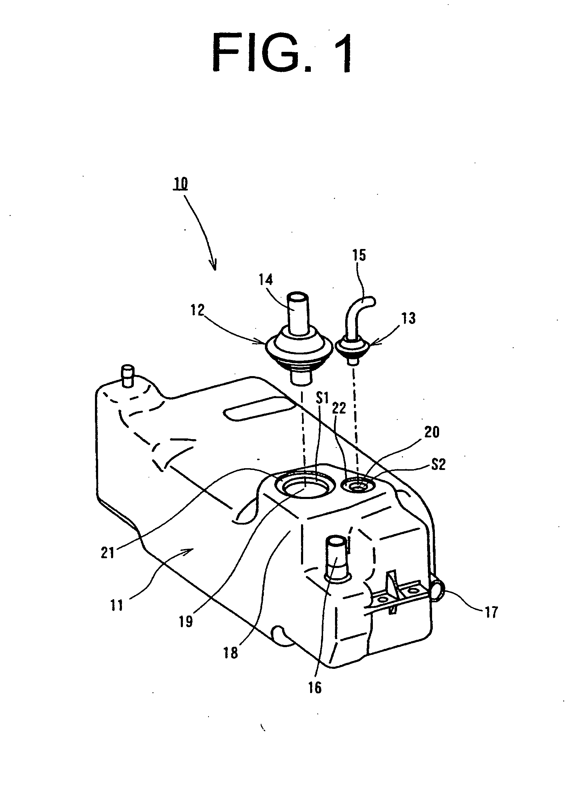

A tank 10 according to a first preferred embodiment of the present invention will now be described with reference to FIGS. 1 through 3. The tank 10 is made of resin and is hereinafter referred to a resin tank 10.

In the present embodiment, the resin tank 10 is an oil tank that is installed in a forklift truck serving as an industrial vehicle. The oil tank constitutes a part of a hydraulic circuit of a loading apparatus.

As shown in FIG. 1, the resin tank 10 mainly includes a tank body 11, a pipe sealing member 12, a pipe sealing member 13, a pipe 14 and a pipe 15.

First of all, the tank body 11 is described. The tank body 11 is structured so as to reserve hydraulic fluid inside thereof. Also, the tank body 11 is made of synthetic resin that has elasticity and thereby its weight is reduced.

Referring to FIG. 1, a tubular inlet 16 and a tubular outlet 17 are installed on one side face of the tank body 11. The hydraulic fluid is returned from the hydraulic circuit, which is not shown in FIG. 1, to the tank body 11 through the inlet 16. Also, the hydraulic fluid is sent from the tank body 11 to an oil pump, which is not shown in FIG. 1, through the outlet 17.

The inlet 16 and the outlet 17 are integrally molded with the tank body 11. A hose or a pipe is connected to the inlet 16 and the outlet 17.

Meanwhile, many curved surfaces are used for the tank body 11. Thereby, the strength of the tank body 11 is improved and the space of the tank body 11 is effectively used.

Incidentally, the temperature of the hydraulic fluid, which is used in the forklift truck, rises to 80 through 100 °C. In addition, as the temperature of the hydraulic fluid rises and falls, the temperature of the tank body 11 also rises and falls. Therefore, thermal stress is caused to the tank body 11. However, the structure of the tank body 11, which has many curved surfaces, prevents an excessive deformation and a crack of the tank body 11 caused by the thermal stress.

In the present embodiment, a part of the top face of the tank body 11 is elevated to form a protuberance 18. A first circular hole 19 and a second circular hole 20 are formed in the top face of the protuberance 18, and each connects with the inside of the tank body 11.

The first circular hole 19 enables the pipe 14 to connect with the tank body 11 through the pipe sealing member 12, which is described later. Also, the second circular hole 20 enables the pipe 15 to connect with the tank body 11 through the pipe sealing member 13, which is described later.

The diameter of the first circular hole 19 is larger than that of the second circular hole 20. The pipe 14 is hereinafter referred to a first pipe 14 and is used for lubrication and identification of oil level. Also, the pipe 15 is hereinafter referred to a second pipe 15 and is used when the tank body 11 recovers the hydraulic fluid that overflows in a hydraulic device such as a lift cylinder.

The first circular hole 19 is further described. As shown in FIGS. 1 through 3, a first stepped portion 21 is annularly formed on the circumference of the first circular hole 19 so as to locate at a lower level than the surface of the protuberance 18. Also, the first stepped portion 21 has the same thickness as the tank body 11.

Therefore, it is mentioned that a marginal portion S1 of the first circular hole 19 is formed by the first stepped portion 21. Note that the marginal portion S1 of the first circular hole 19 is a portion that closely fits to the pipe sealing member 12, which is described later.

The tank body 11 is stepped in such a manner that the first stepped portion 21, which forms the first circular hole 19, has the same thickness as the tank body 11. Thereby, it is considered that the rigidity of the tank body 11 near the first circular hole 19 is enhanced.

Also, a second stepped portion 22 is annularly formed on the circumference of the second circular hole 20 so as to locate at a lower level than the surface of the protuberance 18. The second stepped portion 22 also has the same thickness as the tank body 11.

The first circular hole 19 has a circular shape. The circular shape of the first circular hole 19 enables the pipe sealing member 12 to supply the marginal portion S1 of the first circular hole 19 with uniform contact pressure when the pipe sealing member 12, which is described later, is closely fitted into the first circular hole 19. Thus, the circular shape of the first circular hole 19 is the most suitable shape. Also, the second circular hole 20 has a circular shape. The circular shape of the second circular hole 20 enables the pipe sealing member 13 to supply the marginal portion S2 of the second circular hole 20 with uniform contact pressure when the pipe sealing member 13, which is described later, is closely fitted into the second circular hole 20. Thus, the circular shape of the second circular hole 20 is the most suitable shape.

Now, the pipe sealing members 12 and 13 are described. In the present embodiment, as described above, the resin tank 10 includes the pipe sealing member 12 and the pipe sealing member 13. The pipe sealing member 12 is hereinafter referred to a first pipe sealing member 12 and the pipe sealing member 13 is hereinafter referred to a second pipe sealing member 13.

The first pipe sealing member 12 includes the first pipe 14 and is closely fitted into the first circular hole 19 of the tank body 11. Thereby, the first pipe 14 is connected to the tank body 11.

Also, the second pipe sealing member 13 includes the second pipe 15 and is closely fitted into the second circular hole 20 of the tank body 11. Thereby, the second pipe 15 is connected to the tank body 11.

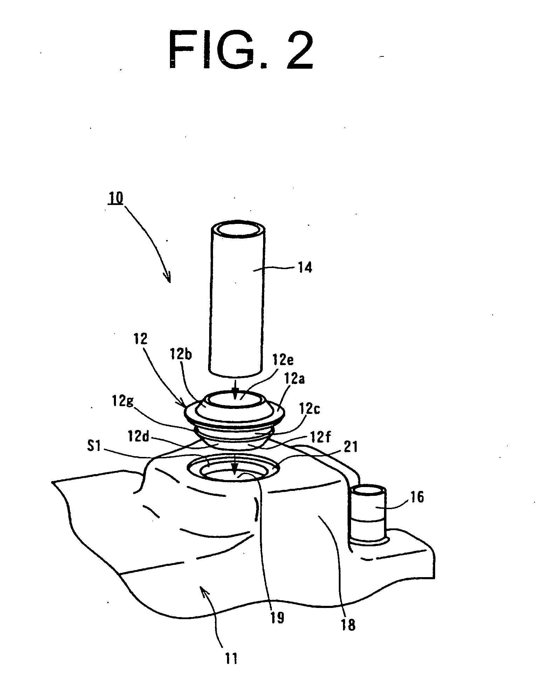

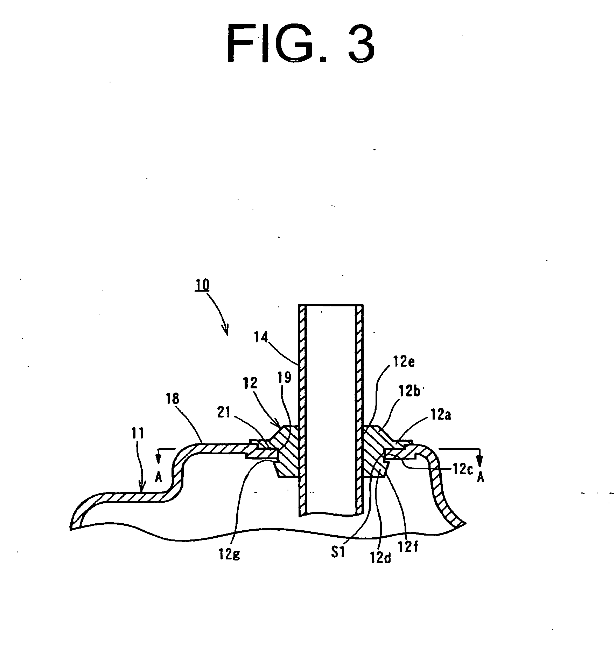

Now, the first pipe sealing member 12 is described in detail. The first pipe sealing member 12 is obtained by integrally molding elastic material such as an oil-resisting rubber. As shown in FIGS. 2 and 3, the first pipe sealing member 12 basically includes a flange 12a, a retaining portion 12b, a closely fitting portion 12c, a tapered collar 12d, a pipe fitting hole 12e, a tapered surface 12f and a collared surface 12g.

Since the first pipe sealing member 12 has the pipe fitting hole 12e, the first pipe 14 is attached to or detached from the first pipe sealing member 12.

The flange 12a, which has the largest diameter among the diameters of the first pipe sealing member 12, is contacted with the first stepped portion 21 of the tank body 11 and a part of the surface of the tank body 11.

The retaining portion 12b is formed on the top face of the flange 12a and has a tapered surface. As shown in FIG. 3, in the first pipe sealing member 12, the pipe fitting hole 12e extends from the top face of the retaining portion 12b to the bottom face of the tapered collar 12d.

Therefore, when the first pipe 14 is installed in the first pipe sealing member 12, the retaining portion 12b regulates the tilt of the first pipe 14 relative to the first pipe sealing member 12.

Also, the closely fitting portion 12c is formed on the bottom face of the flange 12a and is closely fitted into the first circular hole 19 of the tank body 11. In other words, the first pipe sealing member 12 has the closely fitting portion 12c, which is closely fitted into the first circular hole 19.

While the diameter of the closely fitting portion 12c is slightly larger than that of the first circular hole 19 of the tank body 11, since in the present embodiment, the first pipe sealing member 12 is made of elastic material, the closely fitting portion 12c is simply fitted into the first circular hole 19. Thereby, the closely fitting portion 12c is closely contacted with the first circular hole 19 by elastic force of the first pipe sealing member 12.

In addition, the tapered collar 12d is formed underneath the closely fitting portion 12c. As shown in FIG. 3, the tapered surface 12f is formed on the tapered collar 12d in such a manner that the diameter of the first pipe sealing member 12 reduces from the closely fitting portion side to the bottom face of the first pipe sealing member 12. Thereby, the tapered surface 12f enables the first pipe sealing member 12 to be easily fitted into the first circular hole 19.

Further, the collared surface 12g is formed on the closely fitting portion side of the tapered collar 12d and thereby prevents the first pipe sealing member 12 from slipping from the first circular hole 19 when the first pipe sealing member 12 is fitted into the first circular hole 19 so as to be closely contacted with each other.

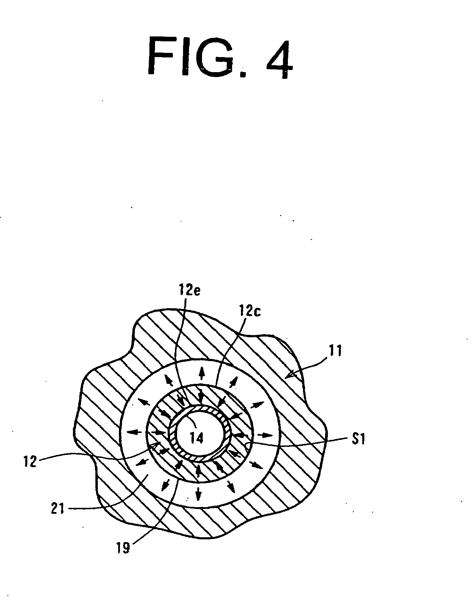

Incidentally, although the pipe fitting hole 12e extends through the first pipe sealing member 12 as mentioned above, in the present embodiment, as shown in FIG. 4, every inner surface of the first pipe sealing member 12 that forms the pipe fitting hole 12e is contacted with a part of the outer surface of the first pipe 14.

Although the inside diameter of the pipe fitting hole 12e is set to be slightly smaller than the outside diameter of the first pipe 14, the first pipe sealing member 12, which is made of elastic member, enables the first pipe 14 to be fitted into the pipe fitting hole 12e. In addition, the first pipe 14 is reliably closely contacted with the pipe fitting hole 12e by the elastic force of the first pipe sealing member 12.

Also, in the present embodiment, the pipe fitting hole 12e extends though the middle of the first pipe sealing member 12. The pipe fitting hole 12e, the flange 12a, the retaining portion 12b, the closely fitting portion 12c and the tapered collar 12d have a concentric circle with each other.

Especially, since the closely fitting hole 12c and the pipe fitting hole 12e have the concentric circle with each other and also the first pipe 14 has a circular shape at cross section, as shown in FIG. 4, the first pipe 14 supplies the first pipe sealing member 12 with uniform contact pressure when the first pipe sealing member 12 is closely fitted into the first circular hole 19.

Therefore, the first pipe sealing member 12 firmly supplies the marginal portion S1 of the first circular hole 19 of the tank body 11 with further uniform contact pressure.

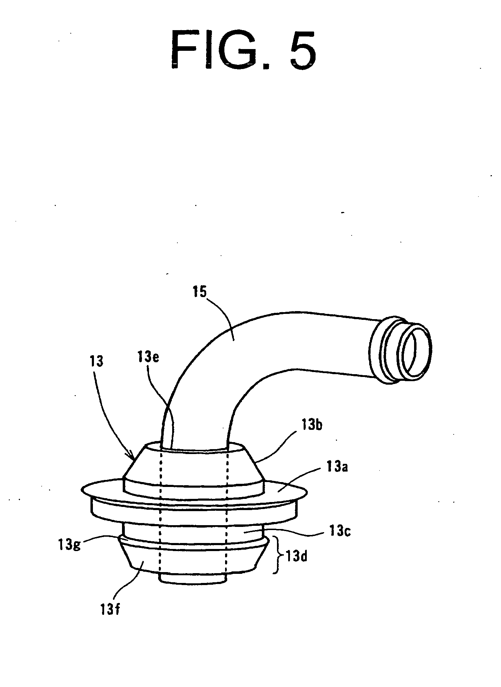

Now, the second pipe sealing member 13 is described in detail. As shown in FIG. 1, while the second pipe sealing member 13 is closely fitted into the second circular hole 20 of the tank body 11, as shown in FIG. 5, the second pipe sealing member 13 basically has the same structure as the first pipe sealing member 12. The second pipe sealing member 13 basically includes a flange 13a, a retaining portion 13b, a closely fitting portion 13c, a tapered collar 13d, a pipe fitting hole 13e, a tapered surface 13f and a collared surface 13g.

Also, the second pipe sealing member 13 is obtained by integrally molding elastic material similarly to the first pipe sealing member 12.

As shown in FIG. 5, in the present embodiment, the second pipe sealing member 13 includes the second pipe 15, which is bent. The second pipe 15 is bonded to the second pipe sealing member 13. Thereby, the second pipe sealing member 13 and the second pipe 15 are integrated with each other.

Now, a process of assembling the resin tank 10 according to the present embodiment will be described.

To begin with, the first pipe sealing member 12 is fitted into the first circular hole 19 of the tank body 11.

In the above stage, the first pipe 14 is not fitted to the first pipe sealing member 12. In addition, the first pipe sealing member 12 is made of elastic material. Further, the tapered collar 12d is formed on the first pipe sealing member 12. Therefore, the first pipe sealing member 12 is easily fitted into the first circular hole 19 of the tank body 11. Meanwhile, it is not necessarily mentioned that the first pipe sealing member 12 is sufficiently closely fitted into the first circular hole 19.

Subsequently, the first pipe 14 is fitted to the first pipe sealing member 12 by inserting the first pipe 14 into the pipe fitting hole 12e of the first pipe sealing member 12.

When the first pipe 14 is fitted to the first pipe sealing member 12, the diameter of the pipe fitting hole 12e of the first pipe sealing member 12 is slightly increased by elasticity of the elastic material of the first pipe sealing member 12.

Thus, the first pipe 14 supplies the first pipe sealing member 12 with uniform contact pressure. Thereby, the first pipe sealing member 12, which receives uniform contact pressure from the first pipe 14, firmly supplies the marginal portion S1 of the first circular hole 19 with uniform contact pressure in accordance with the elastic force of the first pipe sealing member 12 and force resulting from the contact pressure, which is supplied from the first pipe 14. At this point in time, the first pipe sealing member 12 is closely fitted into the first circular hole 19.

The diameter of the first circular hole 19 is slightly increased mainly by deformation of the stepped potion 21, to which elastic force of the first pipe sealing member 12 is applied, when the uniform contact pressure is supplied to the marginal portion S1 of the first circular hole 19 by the first pipe sealing member 12. Thereby, inconvenience such as a excessive deformation or a crack is not caused to the tank body 11 and thus the function of the resin tank 10 is maintained.

Thus, when the uniform contact pressure is supplied to the marginal portion S1 of the first circular hole 19, as shown in FIG. 4, the uniform contact pressure is supplied to the closely fitting portion 12c of the first pipe sealing member 12 so as to resist the contact pressure, which is supplied from the first pipe sealing member 12.

In contrast, when the first pipe sealing member 12 and the first pipe 14 are detached from the tank body 11, the first pipe 14 is first drawn out of the first pipe sealing member 12 and then the first pipe sealing member 12 is drawn out of the first circular hole 19.

Now, the second pipe sealing member 13 is fitted into the second circular hole 20 of the tank body 11. While the first pipe sealing member 12 is fitted into the first circular hole 19 and then the first pipe 14 is inserted into the pipe fitting hole 12e of the first pipe sealing member 12, the second pipe 15 is already installed in the second pipe sealing member 13 before the second pipe sealing member 13 is fitted into the second circular hole 20 of the tank body 11. Therefore, fitting the second pipe sealing member 13, in which the second pipe 15 is already installed, into the second circular hole 20 is slightly harder than fitting the first pipe sealing member 12 into the first circular hole 19. However, since the second pipe sealing member 13 is also made of elastic material and the tapered collar 13d is also formed on the second pipe sealing member 13, the second pipe sealing member 13 is also relatively easily fitted into the second circular hole 20.

In a state that the second pipe sealing member 13 is completely fitted into the second circular hole 20, the second pipe sealing member 13 has already supplied the marginal portion S2 of the second circular hole 20 with uniform contact pressure and has been closely fitted into the second circular hole 20.

In contrast, when the second pipe sealing member 13 is detached from the tank body 11, the second pipe sealing member 13 is merely drawn out of the second circular hole 20.

In the resin tank 10 according to the present embodiment, the connection between the first pipe 14 and the tank body 11 is materialized to each other by closely fitting the first pipe sealing member 12 into the first circular hole 19 of the tank body 11. The closely fitting portion 12c of the first pipe sealing member 12 supplies the marginal portion S1 of the first circular hole 19 with uniform contact pressure, and thereby ensures sealing performance of the first pipe sealing member 12 that serves as a sealing member.

Also, as the temperature of the hydraulic fluid in the tank body 11 rises and falls, thermal stress is caused to the tank body 11. At this time, while the magnitude of the contact pressure, which is supplied to the marginal portion S1 of the first circular hole 19 of the tank body 11 by the first pipe sealing member 12, varies, uniformity of the contact pressure, which is supplied to the marginal portion S1 of the first circular hole 19 of the tank body 11, is maintained.

Further, the relation between the second pipe sealing member 13 and the second circular hole 20 is described similarly to the above relation between the first pipe sealing member 12 and the first circular hole 19.

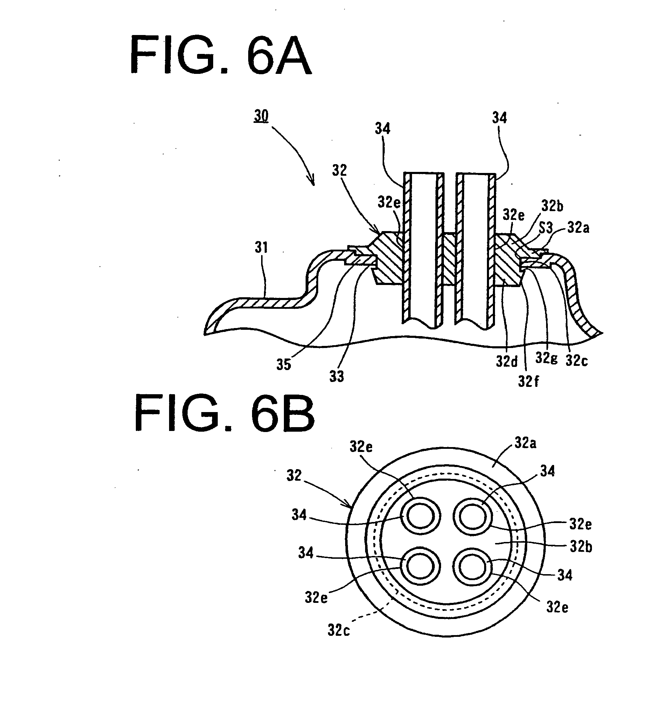

In the present embodiment, the following advantageous effects are obtained.
(1) Since the first pipe sealing member 12 is closely fitted into the first circular hole 19, the first pipe sealing member 12 supplies the marginal portion S1 of the first circular hole 19 with the uniform contact pressure. Thereby, the first pipe sealing member 12 accurately seals the first circular hole 19. Thus, the hydraulic fluid does not leak though an aperture between the first circular hole 19 and the first pipe sealing member 12. Also, since the second pipe sealing member 13 is closely fitted into the second circular hole 20, the second pipe sealing member 13 supplies the marginal portion S2 of the second circular hole 20 with the uniform contact pressure. In a similar manner, the hydraulic fluid does not leak though an aperture between the second circular hole 20 and the second pipe sealing member 13.
(2) Each of the first pipe 14 and the second pipe 15 is connected to the tank body 11 by simply using the first pipe sealing member 12 and the second pipe sealing member 13. Thereby, the number of parts of the resin tank 10 is drastically reduced. In addition, assembly work of the resin tank 10 is easily achieved by reducing the number of parts.
(3) The first pipe sealing member 12 and the second pipe sealing member 13 are made of elastic material. Also, the first pipe sealing member 12 and the second pipe sealing member 13 respectively has the tapered collar 12d and the tapered collar 13d. Therefore, the first pipe sealing member 12 is simply attached to or detached from the first circular hole 19. Also, the second pipe sealing member 13 is simply attached to or detached from the second circular hole 20. Thereby, assembly work of the resin tank 10 is efficiently achieved.
(4) The resin tank 10 has the tank body 11, which is made of resin and in which many curved surfaces are used. In addition, the first circular hole 19 and the second circular hole 20 are formed in the tank body 11. Therefore, the resin tank 10 reasonably absorbs the thermal stress of the tank body 11, which is caused by rise and fall of temperature of the hydraulic fluid, and the contact pressure, which is supplied to the tank body 11 by the first pipe sealing member 12 and the second pipe sealing member 13.
(5) The first pipe sealing member 12 supplies the first pipe 14 with the uniform contact pressure while supplying the marginal portion S1 of the first circular hole 19 with the uniform contact pressure. Therefore, the first pipe 14 is reliably fixed to the first pipe sealing member 12.
   A resin tank 30 according to a second preferred embodiment of the present invention will now be described with reference to FIGS. 6A and 6B.
   In the present embodiment, the resin tank 30 has a third pipe sealing member 32 that is different from the first pipe sealing member 12 and the second pipe sealing member 13 according to the first embodiment while having a tank body 31 that is structured basically similarly to the tank body 11 according to the first embodiment.
   As shown in FIG. 6A, the tank body 31 has a third circular hole 33 whose diameter is relatively large and a third stepped portion 35 annularly formed thereon.
   Meanwhile, in the present embodiment, the third pipe sealing member 32 includes a flange 32a, a retaining portion 32b, a closely fitting portion 32c, a tapered collar 32d, a pipe fitting hole 32e, a tapered surface 32f and a collared surface 32g similarly to the first embodiment. However, as shown in FIG. 6B, the number of the pipe fitting holes 32e is four and the number of the third pipes 34, which are respectively fitted to the third pipe sealing member 32, is four. Thereby, the third pipes 34 are respectively fitted into the pipe fitting holes 32e. In this regard, the third pipe sealing member 32 according to the second embodiment is different from the first pipe sealing member 12 and the second pipe sealing member 13 according to the first embodiment.
   These pipe fitting holes 32e are formed in the third pipe sealing member 32 in such a manner that the distances between each pipe fitting hole 32e and the middle of the third pipe sealing member 32 become equal to each other. Thereby, in a state that the third pipe sealing member 32 is closely fitted into the third circular hole 33 of the tank body 31, the contact pressure, which is supplied to a marginal portion S3 of the third circular hole 33 by the third pipe sealing member 32, is uniformed as far as possible.
   In the present embodiment, the third pipe sealing member 32 is first fitted into the third circular hole 33 similarly to the first pipe sealing member 12 of the first embodiment, and then the third pipe sealing member 32 is closely fitted into the third circular hole 33 of the tank body 31 by fitting each of the third pipes 34 into the corresponding pipe fitting hole 32e.
   In the present embodiment, when the third pipe sealing member 32 is closely fitted to the tank body 31, the similar action to the first pipe sealing member 12 of the first embodiment is substantially obtained. Therefore, the description of the action is omitted.
   In the present embodiment, the similar effects (1), (2), (3), (4) and (5) to the first embodiment are substantially obtained. In addition, the following advantageous effects are obtained.
(6) Since a plurality of the third pipes 34 is fitted into the third pipe sealing member 32, the plurality of third pipes 34 is connected to the tank body 31 by simply fitting the third pipe sealing member 32 into the third circular hole 33. Thereby, the resin tank 30 is simply assembled.
(7) Since the number of the third circular holes 33, which are formed in the tank body 31, and the number of the third pipe sealing members 32 are reduced, the manufacturing cost of the tank body 31 is reduced. Thereby, the manufacturing cost of the resin tank 30 is reduced.

In the present invention, the following alternative embodiments are also practiced.

In the first embodiment, the first pipe 14 and the second pipe 15 are connected to the tank body 11 respectively by using the first pipe sealing member 12 and the second pipe sealing member 13. In an alternative embodiment to the first embodiment, the inlet 16 and the outlet 17 of the tank body 11 are not tubularly formed. An inlet is structured by forming a circular hole in the tank body 11 and by using a pipe sealing member and a pipe. Also, an outlet is structured by forming a circular hole in the tank body 11 and by using a pipe sealing member and a pipe. In this case, the pipe sealing members of the inlet and the outlet are exchanged to each other. Also, the pipes of the inlet and the outlet are exchanged to each other. Thereby, convenience of maintenance of the resin tank is improved.

In the first embodiment, the second pipe sealing member 13 and the second pipe 15, which is manufactured separately from the second pipe sealing member 13, are integrated with each other by bonding the second pipe 15 to the second pipe sealing member 13. In an alternative embodiment to the first embodiment, both of the second pipe sealing member 13 and the second pipe 15 are made of the same material, and are integrally molded with each other. In this case, bonding the second pipe 15 to the second pipe sealing member 13 is not needed. Thereby, the manufacturing cost of the resin tank is reduced.

In the second embodiment, the number of the pipe fitting holes 32e, which are formed in the third pipe sealing member 32, is four and each of the third pipes 34 is freely attached to or detached from the corresponding pipe fitting holes 32e. In an alternative embodiment to the second embodiment, each of the third pipes 34 is bonded to or integrally molded with the third pipe sealing member 32. Thereby, each of the third pipes 34 is integrated with the third pipe sealing member 32. In this case, since the number of parts is reduced, the manufacturing cost of the resin tank 30 is reduced. In addition, the number of the third pipes 34 and the number of the pipe fitting holes 32e are not restricted to four, respectively.

In the second embodiment, the diameters of the third pipes 34 are equal to each other. In an alternative embodiment to the second embodiment, the diameters of pipes are different from each other and pipe fitting holes are formed in a pipe sealing member so as to meet the diameters of the corresponding pipes, respectively. In this case, the arrangement of each pipe fitting hole requires considering in such a manner that the pipe sealing member supplies the marginal portion of a circular hole of the tank body with uniform contact pressure when the pipe sealing member is closely fitted into the circular hole of the tank body.

In the first embodiment, the first circular hole 19 and the second circular hole 20 are formed in the top face of the tank body 11. In the second embodiment, the third circular hole 33 is formed in the top face of the tank body 31. In alternative embodiments to the first and second embodiments, at least a circular hole is formed in the side face of the tank body. In addition, the location of the circular hole and the number of the circular holes are not restricted.

In the first embodiment, the first pipe 14, which is fitted to or bonded to the first pipe sealing member 12, has the surface of an outside diameter and the surface of an inside diameter that are concentric with each other. The second pipe 15, which is fitted to or bonded to the second pipe sealing member 13, has the surface of an outside diameter and the surface of an inside diameter that are concentric with each other. Also, in the second embodiment, each of the third pipes 34, which is fitted to or bonded to the third pipe sealing member 32, has the surface of an outside diameter and the surface of an inside diameter that are concentric with each other. In alternative embodiments to the first and second embodiments, at least a pipe has the surface of an outside diameter and the surface of an inside diameter that are eccentric with each other. Even in this case, a pipe sealing member supplies a marginal portion of a circular hole with uniform contact pressure.

In alternative embodiments to the above embodiments, when the pipe, which is installed in the pipe sealing member, faces the inside or the outside of the tank body, and when the pipe is tilted or bent relative to the tank body, if the pipe or the pipe sealing member is pivoted respectively relative to the pipe fitting hole or the circular hole, the location of the pipe relative to the tank body is adjusted.

In the first embodiment, the first pipe 14 is fitted to the first pipe sealing member 12 after the first pipe sealing member 12 is fitted into the first circular hole 19. In an alternative embodiment to the first embodiment, the first pipe 14 is previously fitted to the first pipe sealing member 12. The first pipe sealing member 12 is fitted into the first circular hole 19 together with the first pipe 14. Thereby, the first pipe sealing member 12 and the first pipe 14 are closely fitted to each other.

In the first and second embodiments, an oil tank, which is installed in a forklift truck serving as an industrial vehicle, is adopted as the resin tank. In alternative embodiments to the first and second embodiments, an altitudinal maintenance-vehicle, which has a hydraulic circuit, or a construction machine is adopted as the resin tank.

In the first embodiment, each of the first pipe 14 and the second pipe 15 is made of metallic material. In an alternative embodiment to the above embodiment, an oil-resistant resin pipe is adopted in place of each pipe made of metallic material. In addition, as long as the function of a pipe is maintained, material of the pipe is appropriately selected.

Therefore, the present examples and embodiments are to be considered as illustrative and not restrictive and the invention is not to be limited to the details given herein but may be modified within the scope of the appended claims.

A resin tank includes a tank body, a pipe sealing member and a pipe. The tank body reserves a liquid and is made of resin. Also, the tank body has at least a circular hole that connects with an inside of the tank body. The pipe sealing member is closely fitted into the circular hole. The pipe is installed in the pipe sealing member.

## Claims

1. A resin tank (10, 30) including a tank body (11, 31), a pipe sealing member (12, 13, 32) and a pipe (14, 15, 34), the tank body (11, 31) reserving a liquid, being made of resin and having at least a circular hole (19, 20, 33) that connects with an inside of the tank body (11, 31),
wherein a closely fitting portion (12c, 13c, 32d) of the pipe sealing member (12, 13, 32) is closely fitted into the circular hole (19, 20, 33),
the sealing member (12, 13, 32) has a flange (12a) having a larger diameter than the closely fitting portion (12c, 13c, 32d) and being in contact with the outer surface of the tank body (11, 31), and the pipe (14, 15, 34) is installed in a pipe fitting hole (12e, 13e) of the pipe sealing member (12, 13, 32), in which the pipe (14, 15, 16) contacts the sealing member (12, 13, 14),
**characterized in that**
a retaining portion (12b, 13b) is formed on the top face of the flange (12a, 13a) having a tapered outer surface with an increasing diameter from a top face of the retaining portion (12b, 13b) towards the flange (12a, 13a), and
the pipe fitting hole (12e, 13e) extends from the top face of the retaining portion (12b, 13b) to the bottom of the sealing member, such that the whole inner surface of the pipe sealing member (12, 13, 32) that forms the pipe fitting hole (12e, 13e) is contacted with a part of the outer surface of the pipe (14, 15, 16).

2. The resin tank (10, 30) according to claim 1, wherein the pipe (14, 15, 34) is detachable from the pipe sealing member (12, 13, 32).

3. The resin tank (10, 30) according to claim 1, wherein the pipe (14, 15, 34) is integrally molded with the pipe sealing member (12, 13, 32).

4. The resin tank (10, 30) according to any one of claims 1 through 3, wherein the pipe sealing member (12, 13, 32) has at least a pipe fitting hole (12e, 13e, 32e).

5. The resin tank (30) according to claim 4, wherein the number of the pipe fitting holes (32e) is plural.

6. The resin tank (10) according to any one of claims 1 through 5, wherein the pipe sealing member (12, 13) is made of elastic material and has a closely fitting portion (12c, 13c) that is closely fitted into the circular hole (19, 20), the closely fitting portion (12c, 13c) and the pipe fitting hole (12e, 13e) having a concentric circle with each other.

7. The resin tank (10, 30) according to any one of claims 1 through 6, wherein the resin tank (10, 30) is an oil tank for use in a loading apparatus of an industrial vehicle.

8. The resin tank (10, 30) according to any one of claims 1 through 7, wherein the pipe (14, 15, 34) is made of metallic material.

## Patentansprüche

1. Harzbehälter (10, 30), der einen Behälterkörper (11, 31), ein Rohrdichtelement (12, 13, 32) und ein Rohr (14, 15, 34) hat, wobei der Tankkörper (11, 31) eine Flüssigkeit bevorratet, aus Harz gemacht ist, und wenigstens ein kreisförmiges Loch (19, 20, 33) hat, das mit einem Inneren des Behälters (31) verbunden ist,
wobei ein dicht passender Abschnitt (12c, 13c, 32d) des Rohrdichtelements (12, 13, 32) dicht in das kreisförmige Loch (19, 20, 33) eingepasst ist,
das Dichtelement (12, 13, 32) einen Flansch (12a) hat, der einen größeren Durchmesser als der dicht passende Abschnitt (12c, 13c, 32d) hat und in Kontakt mit der Außenfläche des Behälterkörpers (11, 31) ist, und das Rohr (14, 15, 34) in ein Rohrpassloch (12e, 13e) des Rohrdichtelements (12, 13, 32) installiert ist, in welchem das Rohr (14, 15, 16) das Dichtelement (12, 13, 14) berührt,
**dadurch gekennzeichnet, dass**
ein Halteabschnitt (12b, 13b) an der oberen Fläche des Flansches (12a, 13a) ausgebildet ist, der eine verjüngte Außenfläche mit einem ansteigenden Durchmesser von einer oberen Fläche des Halteabschnitts (12b, 13b) zu dem Flansch (12a, 13a) hin hat, und
das Rohrpassloch (12e, 13e) sich von der oberen Fläche des Halteabschnitts (12b, 13b) zu der Unterseite des Dichtelements erstreckt, derart, dass die gesamte Innenfläche des Rohrdichtelements (12, 13, 32) die das Rohrpassloch (12e, 13e) ausbildet, mit einem Teil der Außenfläche des Rohrs (14, 15, 16) in Kontakt ist.

2. Harzbehälter (10, 30) gemäß Anspruch 1, wobei das Rohr (14, 15, 34) von dem Rohrdichtelement (12, 13, 32) abnehmbar ist.

3. Harzbehälter (10, 30) gemäß Anspruch 1, wobei das Rohr (14, 15, 34) einstückig mit dem Harzdichtelement (12, 13, 32) geformt ist.

4. Harzbehälter (10, 30) gemäß einem der Ansprüche 1 bis 3, wobei das Rohrdichtelement (12, 13, 32) wenigstens ein Rohrpassloch (12e, 13e, 32e) hat.

5. Harzbehälter (30) gemäß Anspruch 4, wobei die Anzahl der Rohrpasslöcher (32e) eine Vielzahl ist.

6. Harzbehälter (10) gemäß einem der Ansprüche 1 bis 5,
wobei das Rohrdichtelement (12, 13) aus einem elastischen Material gemacht ist und einen dicht passenden Abschnitt (12c, 13c) hat, der dicht in das kreisförmige Loch (19, 20) eingepasst ist, wobei der dicht passende Abschnitt (12c, 13c) und das Rohrpassloch (12e, 13e) einen konzentrischen Kreis miteinander haben.

7. Harzbehälter (10, 30) gemäß einem der Ansprüche 1 bis 6, wobei der Harzbehälter (10, 30) ein Ölbehälter für eine Verwendung in einem Ladegerät eines Industriefahrzeugs ist.

8. Harzbehälter (10, 30) gemäß einem der Ansprüche 1 bis 7, wobei das Rohr (14, 15, 34) aus metallischem Material gemacht ist.

## Revendications

1. Réservoir en résine (10, 30) comportant un corps de réservoir (11, 31), un élément d'étanchéité de tuyau (12, 13, 32) et un tuyau (14, 15, 34), le corps de réservoir (11, 31) contenant un liquide, composé de résine et ayant au moins un orifice circulaire (19, 20, 33) qui est raccordé à l'intérieur du corps de réservoir (11, 31),
dans lequel une partie d'ajustement serré (12c, 13c, 32d) de l'élément d'étanchéité de tuyau (12, 13, 32) est ajustée serrée dans l'orifice circulaire (19, 20, 33),
l'élément d'étanchéité (12, 13, 32) possède une bride (12a) ayant un diamètre supérieur à celui de la partie d'ajustement serré (12c, 13c, 32d) et étant en contact avec la surface externe du corps de réservoir (11, 31), et le tuyau (14, 15, 34) est installé dans un orifice d'ajustement de tuyau (12e, 13e) de l'élément d'étanchéité de tuyau (12, 13, 32), dans lequel le tuyau (14, 15, 16) est en contact avec l'élément d'étanchéité (12, 13, 14),
**caractérisé en ce que**
une partie de retenue (12b, 13b) est formée sur la face supérieure de la bride (12a, 13a) ayant une surface externe conique avec un diamètre qui augmente d'une face supérieure de la partie de retenue (12b, 13b) à la bride (12a, 13a), et
l'orifice d'ajustement de tuyau (12e, 13e) s'étend à partir de la face supérieure de la partie de retenue (12b, 13b) jusqu'à la partie inférieure de l'élément d'étanchéité, de telle sorte que toute la surface interne de l'élément d'étanchéité de tuyau (12, 13, 32) qui forme l'orifice d'ajustement de tuyau (12e, 13e) est en contact avec une partie de la surface externe du tuyau (14, 15, 16).

2. Réservoir en résine (10, 30) selon la revendication 1, dans lequel le tuyau (14, 15, 34) peut être détaché de l'élément d'étanchéité de tuyau (12, 13, 32).

3. Réservoir en résine (10, 30) selon la revendication 1, dans lequel le tuyau (14, 15, 34) est moulé en une seule pièce avec l'élément d'étanchéité de tuyau (12, 13, 32).

4. Réservoir en résine (10, 30) selon l'une quelconque des revendications 1 à 3, dans lequel l'élément d'étanchéité de tuyau (12, 13, 32) possède au moins un orifice d'ajustement de tuyau (12e, 13e, 32e).

5. Réservoir en résine (30) selon la revendication 4, dans lequel le nombre d'orifices d'ajustement de tuyau (32e) est supérieur à 1.

6. Réservoir en résine (10) selon l'une quelconque des revendications 1 à 5, dans lequel l'élément d'étanchéité de tuyau (12, 13) est composé d'un matériau élastique et possède une partie d'ajustement serré (12c, 13c) qui est ajustée serrée dans l'orifice circulaire (19, 20), la partie d'ajustement serrée (12c, 13c) et l'orifice d'ajustement de tuyau (12e, 13e) ayant un cercle concentrique commun.

7. Réservoir en résine (10, 30) selon l'une quelconque des revendications 1 à 6, dans lequel le réservoir en résine (10, 30) est un réservoir d'huile pour être utilisé dans un appareil de chargement d'un véhicule industriel.

8. Réservoir en résine (10, 30) selon l'une quelconque des revendications 1 à 7, dans lequel le tuyau (14, 15, 34) est composé d'un matériau métallique.
